# EUROPÄISCHE PATENTSCHRIFT

(11) **EP 0 654 207 B1**
(45) Veröffentlichungstag und Bekanntmachung des Hinweises auf die Patenterteilung: **17.03.1999**
(21) Anmeldenummer: 94115424.7
(22) Anmeldetag: 30.09.1994
(51) Int. Cl.: A01C 7/08

(54) **Pneumatische Verteilmaschine**
Pneumatic broadcaster
Epandeur pneumatique

(30) Priorität: 24.11.1993 DE 4339996; 25.03.1994 DE 4410364
(43) Veröffentlichungstag der Anmeldung: 24.05.1995
(73) Patentinhaber: Amazonen-Werke H. Dreyer GmbH & Co. KG, D-49205 Hasbergen (DE)
(72) Erfinder: Scheufler, Bernd, Dr. Ing., D-49205 Hasbergen (DE); Wiemeyer, Benno, D-49504 Lotte-Halen (DE)

(56) Entgegenhaltungen:
- EP-A- 0 189 789
- EP-A- 0 252 348
- EP-A- 0 328 858

## Beschreibung

Die Erfindung betrifft eine pneumatische Verteilmaschine gemäß des Oberbegriffes des Patentanspruches 1.

Eine derartige Verteilmaschine ist in der nicht vorveröffentlichen DE-OS 43 08 815 beschrieben.

Bei dieser pneumatischen Verteilmaschine werden einige Säschare beim Anlegen der Fahrgassenschaltung abgesperrt. Die an sich den Fahrgassen anlegenden Säscharen zugeführte Saatgutmenge wird auf die unmittelbar neben den Fahrgassensäscharen befindlichen Säschare und den sich daneben befindlichen Säscharen aufgeteilt. Hierdurch wird sichergestellt, daß im Randbereich der Fahrgassen, d. h., daß bei den Fahrgassen jeweils benachbarten Säreihen eine dichtere Belegung mit Saatgut erfolgt.

Es haben nunmehr weitergehende Messungen gezeigt, daß zusätzlich auch allen anderen Säscharen bei dem Anlegen der Fahrgassen eine höhere Saatgutmenge als beim Nichtanlegen der Fahrgassen zugeführt wird.

Der Erfindung liegt die Aufgabe zugrunde, auf einfache Weise sicherzustellen, daß dem in Entfernung von den Fahrgassen liegenden Säschar zumindest annähernd die gleiche Menge wie bei dem Nichtanlegen der Fahrgassen zugeführt wird.

Diese Aufgabe wird in erfindungsgemäßer Weise durch die kennzeichnende Maßnahme des Anspruches 1 gelöst. Infolge dieser Maßnahme werden erhebliche Mengen Saatgut eingespart, wobei jedoch der gleiche Ertrag gesichert bleibt. In bevorzugter Weise wird die Dosiereinrichtung derart verstellt, daß die auszubringende Menge um die Menge der an sich den fahrgassenanlegenden Säschare zugeführten Menge reduziert wird.

Um weitere Einstellmöglichkeiten für die Reduzierung der Ausbringmenge beim Anlegen der Fahrgassen zu erreichen, ist vorgesehen, daß in dem Antrieb des Dosierorganes ein Übersetzungs- und/oder Vorgelegetrieb angeordnet ist, daß dieser Übersetzungs- und/oder Vorlegetrieb als Übersetzungsverhältnis zumindest annähernd das Verhältnis von 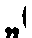 Gesamtzahl Säschare pro Dosierorgan" zu 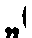 Gesamtzahl Säschare pro Dosierorgan minus Fahrgassensäschare pro Dosierorgan" aufweist.

Durch diesen Übersetzungs- und/oder Vorgelegetrieb wird also in einfacher Weise auf mechanischem Wege die Ausbringmenge beim Anlegen der Fahrgassen entsprechend reduziert. Hierbei kann das Übersetzungsverhältnis genau oder in der Nähe des beanspruchten Verhältnisses liegen, wobei es in einigen Fällen sinnvoll ist, die Ausbringmenge nicht im vollen Umfang um das vorbeschriebene Verhältnis zu reduzieren. Eine Teilreduzierung reicht in vielen Fällen auch schon aus.

Damit in einfacher Weise bei dem Nichtanlegen der Fahrgassen die gewünschte Ausbringmenge ausgebracht wird, ist vorgesehen, daß der Übersetzungs- und/oder Vorgelegetrieb eine weitere Übersetzungsstufe aufweist, deren Übersetzungsverhältnis 1 : 1 ist.

Eine automatische Reduzierung der Ausbringmenge beim Anlegen der Fahrgassen wird dadurch erreicht, daß der Übersetzungs- und/oder Vorgelegetrieb eine Schalteinrichtung aufweist, daß die Schalteinrichtung mit der Fahrgassenschaltungseinrichtung gekoppelt ist.

Eine vorteilhafte Anordnung der Verteilerleitungen wird dadurch erreicht, daß die durch einen Meßvorgang bei abgesperrten Verteilerleitungen mit den größten Saatgut- oder Düngerdurchsatz ermittelten Verteilerleitungen an die unmittelbar neben dem Fahrgassensäschar sich befindlichen Säscharen angeschlossen sind.

Weitere Einzelheiten der Erfindung sind der Beispielsbeschreibung und den Zeichnungen zu entnehmen. Hierbei zeigen
- Fig. 1: das pneumatische Verteilsystem einer Sämaschine in Prinzipdarstellung,
- Fig. 2: die Zuordnung der Säschare sowie der Absperrvorrichtung an dem Verteilerkopf einer pneumatischen Verteilmaschine in Prinzipdarstellung,

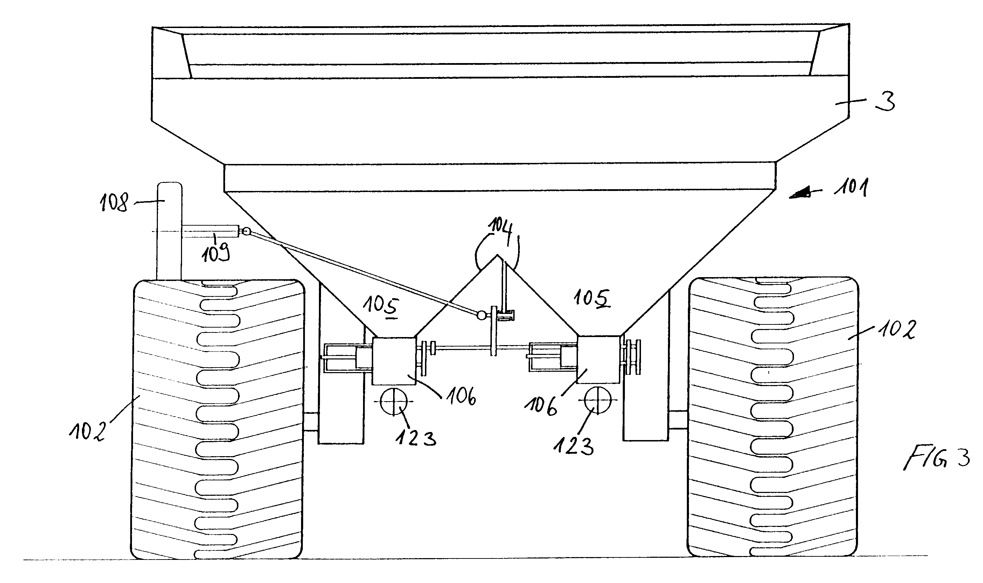

- Fig. 3: die pneumatische Drillmaschine in der Ansicht von hinten in Prinzipdarstellung,

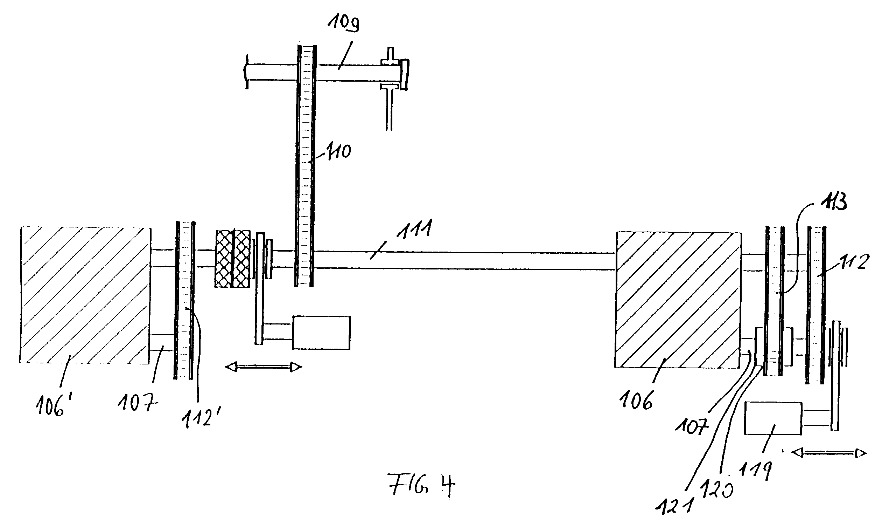

- Fig. 4: die Anordnung des Antriebes für die Dosierorgane in der Draufsicht und in Prinzipdarstellung,
- Fig. 5: die Anordnung des Dosier- und der Verteilerleitungen in Prinzipdarstellung und
- Fig. 6: den Anschluß der Verteilerleitungen an die Säschare in Prinzipdarstellung.

Die als Sämaschine ausgebildete pneumatische Verteilmaschine weist den Vorratsbehälter 1, das Gebläse 2, das zentrale Dosierorgan 3, den Verteilerkopf 4 und die an einem Rahmen angelenkten Säschare 5 auf. Das sich im Vorratsbehälter 1 befindliche Saatgut wird über das zentrale Dosierorgan 3, welches von dem Antrieb 14 in einstellbarer Weise angetrieben wird, über die Schleuse 6 in die zentrale Förderleitung 7 gefördert, wo es von dem von dem Gebläse 2 erzeugten Luftstrom erfaßt und zum Verteilerkopf 4 geblasen wird. Durch den einstellbaren Antrieb 14 des Dosierorgans 3 läßt sich die ausbringende Menge des Saatgutes oder Düngers variieren und einstellen, wie weiter unten noch erläutert wird. An dem Verteilerkopf 4 befinden sich die verschiedenen Ausläufe 8, an denen jeweils eine Saatleitung 9 angeschlossen ist. Jede dieser Saatleitungen 9 führt jeweils zu einem Säschar 5. Über den Verteilerkopf 4 wird das Saatgut auf die Ausläufe 8 gleichmäßig aufgeteilt und gelangt über die Saatleitungen 9 zu den Säscharen 5, mittels derer das Saatgut im Boden 10 abgelegt wird.

Wenn an sämtlichen Ausläufen 8 jeweils eine Saatleitung 9 und ein Säschar 5 angeordnet ist, wird das Saatgut jedem Säschar 8 und jeder Saatleitung 9 in zumindest annähernd gleich großen Mengen über den Verteilerkopf 4 zudosiert.

Wenn nun in gleichmäßigen Abständen beim Ausbringen des Saatgutes Fahrgassen angelegt werden sollen, in dem als zu den Säscharen 5', die als Fahrgassensäschare bezeichnet werden, führenden Leitungen 9', das Saatgut über die als Absperrelemente 11 ausgebildeten Absperreinrichtungen beim Anlegen der Fahrgassen abgesperrt werden, wird das Saatgut nicht in den an diese Ausläufe 8' angeschlossene Verteilerleitungen 9' zugeleitet, sondern bleiben im Verteilerkopf 4 zurück und werden auf die übrigen Ausläufe 8 in nachfolgend beschriebener Weise aufgeteilt. Die Absperreinrichtungen 11 werden über die Fahrgassenschaltungseinrichtung 15 betätigt.

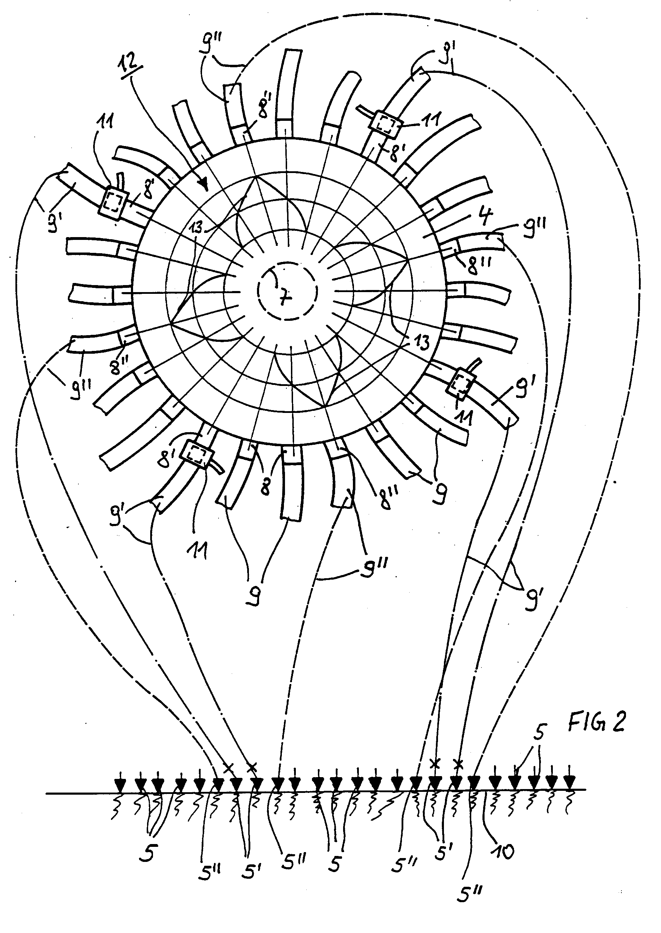

Wie in Fig. 2 erkennbar ist, sind für die Sämaschine für jede Fahrgassenspur zwei Fahrgassensäschare 5' vorgesehen. In den zu den Fahrgassensäscharen 5' führenden Zuleitungen 9' sind die Absperrvorrichtungen 11 an den Ausläufen 8' angeordnet. Die Absperreinrichtungen 11 sind, wie ein einfacher Blick auf die Fig. 2 zeigt, an den Ausläufen des Verteilerkopfes 4 gleichmäßig verteilt angeordnet. Die Absperreinrichtungen 11 sind in einer sternförmigen Anordnung an den Ausläufen 8' des Verteilerkopfes 4 angeschlossen. Zwischen den mit den Absperrvorrichtungen 11 versehenen Ausläufen 8' des Verteilerkopfes 4 befinden sich zumindest zwei Ausläufe 8 ohne Absperrvorrichtung. Die durch ein Meßvorgang durch die Absperrvorrichtungen 11 abgesperrten Ausläufe 8'' mit den größten Saatgut-oder Düngerdurchsatz ermittelten Ausläufe 8'' sind über die Verteilerleitung 9'' an die unmittelbar neben den Fahrgassensäscharen 5' befindlichen Säschare 5'' verbunden. In dem Verteilerkopf 4 ist das Verteilungsdiagramm 12 der Mengenverteilung des bei dem Meßvorgang ermittelten Saatgutdurchsatzes dargestellt. Wie dem Diagramm 12 zu entnehmen ist, werden den Verteilerleitungen 9' die größte Menge Saatgut zugeleitet. Wie weiterhin dem Diagramm entnehmbar ist, werden ausgehend von den Ausläufen 8'' zu den Ausläufen 8' abfallend weniger Saatgut zugeführt, wie die Verteilkurven 13 zeigen. Die Verteilkurven 13 zeigen die Saatmengenverteilung auf die einzelnen Ausläufe bei abgesperrten Ausläufen 8'.

Die Fahrgassenschaltungseinrichtung 15 ist über ein Kabel 16 mit der Einstelleinrichtung des Antriebes 14 für die Dosiereinrichtung 3 verbunden. Hierbei ist die Fahrgassenschaltungseinrichtung 15 mit der Einstelleinrichtung der Dosiereinrichtung 3 derart verknüpft, daß bei dem Anlegen der Fahrgassen die Dosiereinrichtung 3 derart verstellt wird, daß die auszubringende Menge um einen Teil oder um die Menge der an sich den Fahrgassen anlegenden Säschare 5' zugeführten Menge reduziert wird. Hierdurch wird erheblich an Saatgut eingespart. Entsprechend der vorherrschenden Einsatzbedingungen wird die zu reduzierende Menge entweder bereits vom Hersteller fest vorgegeben oder es ist möglich, daß durch eine geeignete Eingabevorrichtung die zu reduzierende Menge bzw. der zu reduzierende Mengenanteil in die Einstelleinrichtung für die Dosiereinrichtung 3 eingegeben wird.

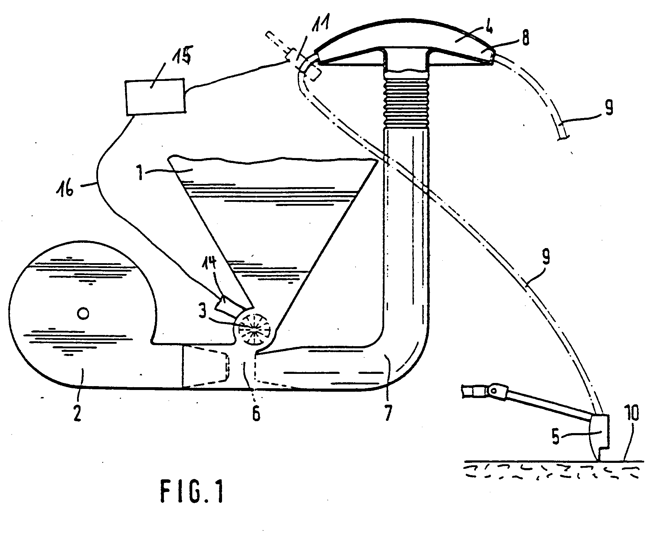

Die pneumatische Verteilmaschine weist den Vorratsbehälter 101 auf. Der Vorratsbehälter 101 ist, wie in Fig. 1 angedeutet ist, oberhalb der Laufräder 102 der Verteilmaschine angeordnet. Hierbei befindet sich ein Teil des Vorratsbehälters 1 in dem Raum zwischen den Laufrädern 102, so daß sich eine niedrige Anordnung des Vorratsbehälters 101 ergibt. Auf dem Vorratsbehälter 101 ist ein Aufsatzbehälterelement 103 zur Vergrößerung des Fassungsvolumens angeordnet. Der Vorratsbehälter 101 ist durch das dachförmige Mittelteil 104 in zwei Auslauttrichter 105 aufgeteilt. Jedem Auslauttrichter 105 ist eine Dosiereinrichtung 106 und 106' zugeordnet. Die Dosiereinrichtungen 106, 106' bestehen aus einem einstellbaren Schubrad. Die Dosierwelle 107 der Dosierorgane 106, 106' werden durch das auf dem Laufrad 102 der Drillmaschine abrollende Bodenantriebsrad 108 über die Welle 109, den Kettentrieb 110 und die Vorgelegewelle 111 sowie den Kettentrieb 112 sowie den Übersetzungstrieb 113 angetrieben.

Bei dem Nichtanlegen der Fahrgassen wird das Schubrad des Dosierorganes 106 über die Vorgelegewelle 111 und den Kettentrieb 112 angetrieben. Das Dosierorgan 106' wird durch die Vorgelegewelle 111 und den Kettentrieb 112' angetrieben.

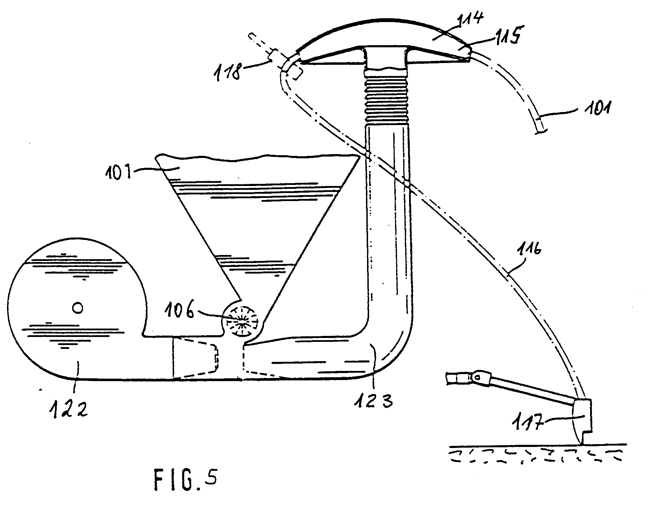

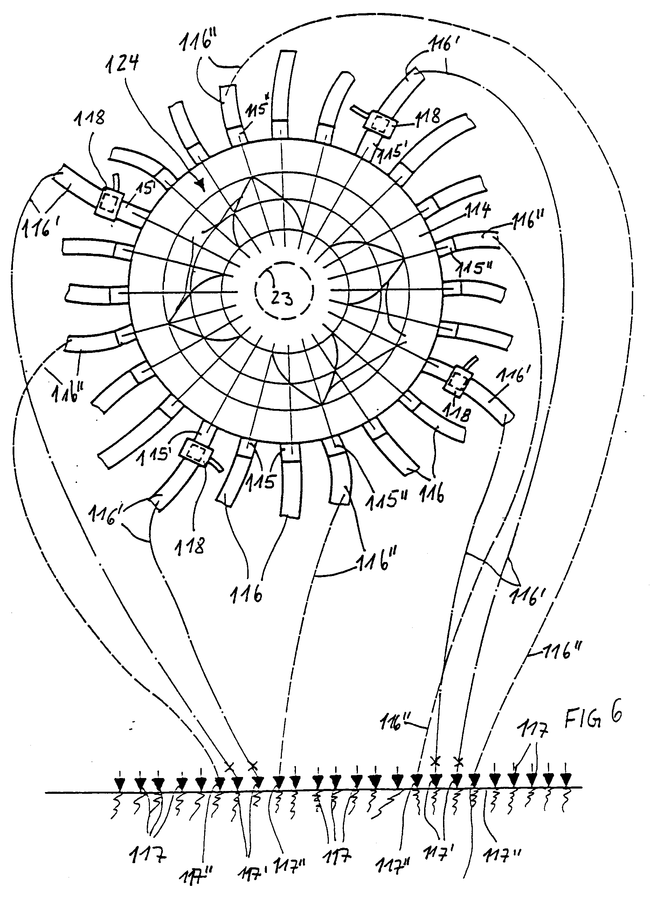

Das Dosierorgan 106 führt das Saatgut einem Verteilerkopf 114 zu, während das andere Dosierorgan 106' das Saatgut einem weiteren Verteilerkopf zuführt. Von dem Verteilerkopf 114 gehen einzelne Ausläufe 115 ab, die über Saatgutleitungen 116, den Säscharen 117 das Saatgut zuführen. An einigen Ausläufen 115' dieses Verteilerkopfes 114 sind, wie die Fig. 5 und 6 zeigen, Absperreinrichtungen 118 angeordnet.

Beim Anlegen der Fahrgassen werden einige der Verteilerleitungen 116', die von dem Verteilerkopf 114 zu den Fahrgassensäscharen 117' führen, mittels der Absperreinrichtung 118 abgesperrt. Gleichzeitig wird über das Betätigungselement 119 der Kettentrieb 112 von der das Schubrad eintreibenden Dosierwelle 107 abgekuppelt. Die Dosierwelle 107 des Schubrades wird dann über den Kettentrieb des Übersetzungstriebes 113 angetrieben. Zwischen dem Kettenrad 120 des Übersetzungstriebes 113 und der Dosierwelle 107 ist der Freilauf 121 angeordnet. Das Übersetzungsverhältnis des Kettentriebes 112 beträgt 1 : 1, während das Übersetzungsverhältnis des Übersetzungstriebes 113 das Verhältnis 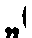 Gesamtzahl Säschare pro Dosierorgan zu Gesamtzahl Säschare 117 pro Dosierorgan 106 minus Fahrgassensäschare 117' pro Dosierorgan 106" aufweist. Das heißt also, daß die Ausbringmenge Saatgut durch das Dosierorgan 106 reduziert wird. Das Betätigungselement 119 ist mit der Fahrgassenschaltungseinrichtung gekoppelt, so daß automatisch der Übersetzungstrieb 113 eingeschaltet wird.

Von dem Dosierorgan 103 aus, welches das Saatgut in eine an ein Gebläse 122 angeschlossene Förderleitung 123 fördert, wird das Saatgut über dem Verteilerkopf 114 und den Saatleitungen 116 den an einem Rahmen angelenkten Säscharen 117 zugeleitet. Jede Saatleitung 116 führt jeweils zu einem Säschar 117. Über den Verteilerkopf 114 wird das Saatgut auf die Ausläufe 115 gleichmäßig aufgeteilt und gelangt über die Saatleitungen 116 zu den Säscharen 117, mittels derer das Saatgut im Boden abgelegt wird. An dem Verteilerkopf 114 sind, wie bereits erwähnt, die Absperreinrichtungen 118 zum Anlegen der Fahrgassen angeordnet.

Wenn nun in gleichmäßigen Abständen beim Ausbringen des Saatgutes Fahrgassen angelegt werden sollen, in dem als zu den Säscharen 117', die als Fahrgassensäschare bezeichnet werden, führenden Leitungen 116' das Saatgut über die als Absperrelemente ausgebildeten Absperreinrichtungen 118 beim Anlegen der Fahrgassen abgesperrt werden, wird das Saatgut nicht den an diese Ausläufe 115' angeschlossenen Saatleitungen 116' zugeleitet, sondern bleibt im Verteilerkopf 114 zurück, und werden auf die übrigen Ausläufe in nachfolgend beschriebener Weise aufgeteilt. Insgesamt jedoch wird, wie vorgeschrieben, die vom Dosierorgan 106 dosierte Menge Saatgut entsprechend reduziert, damit die jedem Säschar 117 zugeführte Menge ungefähr gleich bleibt. Die Absperreinrichtung 118 wird über eine Fahrgassenschaltungseinrichtung, die nicht näher dargestellt ist, betätigt.

Wie die Fig. 6 zeigt, sind für die Sämaschine für jede Fahrgassenspur zwei Fahrgassensäschare 117' vorgesehen. In den zu den Säscharen 117' führenden Leitungen 116 sind die Absperreinrichtungen1 18 an den Ausläufen 115' angeordnet. Die Absperreinrichtungen 118 sind, wie ein einfacher Blick auf die Fig. 6 zeigt, an den Ausläufen 115 des Verteilerkopfes 114 gleichmäßig verteilt angeordnet. Die Absperrvorrichtungen 118 sind in einer sternförmigen Anordnung an den Ausläufen1 15 des Verteilerkopfes 114 angeschlossen. Zwischen den mit den Absperrvorrichtungen 118 versehenen Ausläufen 115' des Verteilerkopfes 114 befinden sich zumindest zwei Ausläufe 115 ohne Absperrvorrichtung 118. Die durch einen Meßvorgang durch die Absperrvorrichtung 118 abgesperrten Ausläufe 115' mit den größten Saatgut- und/oder Düngerdurchsatz ermittelten Ausläufe 115'' sind über die Saatleitungen 116'' an die unmittelbar neben den Fahrgassensäscharen 117' befindlichen Säschare 117'' angeschlossen. In dem Verteilerkopf 114 ist das Verteilungsdiagramm 124 der Mengenverteilung des bei dem Meßvorgang ermittelten Saatgutdurchsatzes dargestellt. Wie dem Diagramm 124 zu entnehmen ist, werden den Verteilerleitungen 115'' die größte Menge Saatgut zugeleitet.

Wie weiterhin dem Diagramm 124 entnehmbar ist, werden ausgehend von den Ausläufen 115'' zu den Ausläufen abfallend weniger Saatgut zugeführt, wie die Verteilkurven zeigen. Die Verteilkurven zeigen die Saatmengenverteilung auf die einzelnen Ausläufe bei abgesperrten Ausläufen 115'.

## Patentansprüche

1. Pneumatische Verteilmaschine für Saatgut und/oder Dünger oder dergleichen mit einem Vorratsbehälter (1) und einer zentralen Dosiereinrichtung (3), an welcher sich eine an einem Gebläse angeschlossene und zu einem zentralen Verteilerkopf führende Förderleitung anschließt, wobei von dem Verteilerkopf die einzelnen Verteilerleitungen abzweigen, und mit einigen Verteilerleitungen (9') zugeordneten und von einer Fahrgassenschaltungseinrichtung betätigten Absperreinrichtungen (11), um Fahrgassenmarkierungen durchzuführen oder Fahrgassen anzulegen, wobei die Verteilerleitungen (9, 9') in Säscharen (5, 5') münden, wobei die mit den Absperrvorrichtungen (11) ausgestatteten Verteilerleitungen (9') in die Fahrgassen anlegenden Säscharen (5') ausmünden, dadurch gekennzeichnet, daß die Fahrgassenschaltungseinrichtung (15) mit der Einstelleinrichtung der Dosiereinrichtung (3) derart verknüpft oder gekoppelt ist, daß die Dosiereinrichtung (3) derart verstellt wird, daß die auszubringende Menge um einen Teil der Menge, der an sich den Fahrgassen anlegenden Säschare (5') zugeführten Menge, reduziert wird.

2. Verteilmaschine nach Anspruch 1, dadurch gekennzeichnet, daß die Dosiereinrichtung derart verstellt wird, daß die auszubringende Menge um die Menge der an sich den Fahrgassen anlegenden Säschare (5') zugeführten Menge reduziert wird.

3. Verteilmaschine nach Anspruch 1, dadurch gekennzeichnet, daß in dem Antrieb des Dosierorganes (10) ein Übersetzungs- und/oder Vorgelegetrieb (113) angeordnet ist, daß dieser Übersetzungs- und/oder Vorgelegetrieb (113) als Übersetzungsverhältnis zumindest annähernd das Verhältnis von 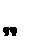 Gesamtzahl Säschare (115) pro Dosierorgan (10)" zu 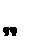 Gesamtzahl Säschare (115) pro Dosierorgan (106) minus Fahrgassensäschare (115') pro Dosierorgan (106)" aufweist.

4. Verteilmaschine nach Anspruch 3, dadurch gekennzeichnet, daß der Übersetzungs-und/oder Vorgelegetrieb eine weitere Übersetzungsstufe (112) aufweist, deren Übersetzungsverhältnis 1 : 1 ist.

5. Verteilmaschine nach einem oder mehreren der vorstehenden Ansprüche, dadurch gekennzeichnet, daß der Übersetzungs- und/oder Vorgelegetrieb eine Schalteinrichtung aufweist, daß die Schalteinrichtung mit der Fahrgassenschaltungseinrichtung gekoppelt ist.

6. Verteilmaschine nach einem oder mehreren der vorstehenden Ansprüche, dadurch gekennzeichnet, daß die durch einen Meßvorgang bei abgesperrten Verteilerleitungen (116') mit dem größten Saatgut- oder Düngerdurchsatz ermittelten Verteilerleitungen (116'') an die unmittelbar neben den Fahrgassensäscharen (117') sich befindlichen Säscharen (117'') angeschlossen sind.

## Claims

1. Pneumatic distributing machine for seeds and/or fertilisers or the like, including a hopper (1) and a central metering means (3), which communicates with a feed line connected to a blower and leading to a central distributor head, the individual distribution lines branching-off from the distributor head, and including shut-off means (11), which are associated with some distribution lines (9') and actuated by a tramline circuit arrangement, in order to effect tramline markings or to make tramlines, the distribution lines (9, 9') terminating in sowing coulters (5, 5'), the distribution lines (9'), provided with, the shut-off means (11), terminating in the tramline-making sowing coulters (5'), characterised in that the tramline circuit arrangement (15) is connected or coupled to the means for setting the metering means (3) in such a manner that the metering means (3) is adjusted in such a manner that the quantity to be distributed is reduced by a portion of the quantity which is actually supplied to the tramline-making sowing coulters (5').

2. Distributing machine according to claim 1, characterised in that the metering means is adjusted in such a manner that the quantity to be distributed is reduced by the quantity of the quantity which is actually supplied to the tramline-making sowing coulters (5').

3. Distributing machine according to claim 1, characterised in that a transmission and/or reduction gear (113) is disposed in the drive of the metering member (10), and in that this transmission and/or reduction gear (113) has, as the transmission ratio, at least approximately the ratio of "total number of sowing coulters (115) per metering member (10)" to "total number of sowing coulters (115) per metering member (106) minus tramline sowing coulters (115') per metering member (106)".

4. Distributing machine according to claim 3, characterised in that the transmission and/or reduction gear has an additional transmission step (112), the transmission ratio of which is 1 : 1.

5. Distributing machine according to one or more of the preceding claims, characterised in that the transmission and/or reduction gear has a circuit arrangement, and in that the circuit arrangement is coupled to the tramline circuit arrangement.

6. Distributing machine according to one or more of the preceding claims, characterised in that the distribution lines (116''), determined by a measuring process to have the greatest seed or fertiliser throughput with shut-off distribution lines (116'), communicate with the sowing coulters (117'') situated immediately adjacent the tramline sowing coulters (117').

## Revendications

1. Distributeur pneumatique de semence et/ou d'engrais ou produits analogues, comprenant un réservoir d'alimentation (1) et une installation centrale de dosage (3) à laquelle est reliée une machine soufflante et une conduite de transfert aboutissant à une tête distributrice centrale, et les différentes conduites de répartition partent de la tête distributrice, ainsi que des dispositifs de fermeture (11) associés à certaines conduites de répartition (9') et actionnés par l'installation de commutation des voies de passage, pour effectuer des marquages de voies de passage ou réaliser des voies de passage,
les conduites de répartition (9, 9') débouchent dans les socs de semoir (5, 5'), les conduites de répartition (9') équipées des dispositifs de fermeture (11) débouchant dans les socs de semoir (5') correspondant aux voies de passage à réaliser,
caractérisé en ce que
l'installation de commutation des voies de passage (5) est combinée ou couplée à l'installation de réglage de l'installation de dosage (3) pour régler l'installation de dosage (3) pour que la quantité à distribuer soit réduite d'une partie quantitative correspondant à la quantité fournie aux socs de semoir (5') correspondant aux voies de passage.

2. Distributeur selon la revendication 1,
caractérisé en ce que
l'installation de dosage est réglée pour que la quantité à distribuer soit réduite de la quantité fournie aux socs de semoir (5,) correspondant aux voies de passage.

3. Distributeur selon la revendication 1,
caractérisé en ce que
dans l'entraînement de l'organe de dosage (10) il est prévu une transmission réductrice et/ou intermédiaire (113), cette transmission réductrice et/ou intermédiaire (113) ayant un rapport de démultiplication correspondant sensiblement au rapport entre le nombre total de socs de semoir (115) pour l'organe de dosage (10) et le nombre total de socs de semoir (115) pour l'organe de dosage (106) diminué du nombre de socs de semoir de voies de passage (115') par l'organe de dosage (106).

4. Distributeur selon la revendication 3,
caractérisé en ce que
la transmission réductrice et/ou intermédiaire comporte un autre étage démultiplicateur (112) dont le rapport de démultiplication est égal à 1:1.

5. Distributeur selon l'une quelconque des revendications précédentes,
caractérisé en ce que
la transmission réductrices et/ou intermédiaire comporte une installation de commutation couplée à l'installation de commutation des voies de passage.

6. Distributeur selon l'une quelconque des revendications précédentes,
caractérisé en ce que
les conduites de répartition (116'') correspondant au plus grand débit de semence ou d'engrais selon une opération de mesure, les conduites de répartition (116') étant fermées, sont reliées aux socs de semoir (117'') qui se trouvent directement à côté des socs de semoir de voies de passage (117').
